# EUROPEAN PATENT APPLICATION

(11) **EP 4 752 490 A1**
(43) Date of publication of application: **03.06.2026**
(21) Application number: 25218054.2
(22) Date of filing: 24.11.2025
(51) Int. Cl.: F28D 20/02, F24H 7/04, F24H 4/04, F24F 5/00, F28D 7/08

(54) **THERMAL ENERGY STORAGE SYSTEM**

(30) Priority: 27.11.2024 US 202463726039 P; 18.07.2025 US 202563846739 P
(71) Applicant: Carrier Corporation, Palm Beach Gardens, FL 33418 (US)
(72) Inventor: WANG, Chaojie, Shanghai, 201206 (CN); ZHANG, Xinglei, Shanghai, 201206 (CN); SHEN, Guangyu, Shanghai, 201206 (CN); KOZ, Mustafa, East Syracuse, 13057 (US); VAN HASSEL, Bart, Palm Beach Gardens, 33418 (US); MAKWINSKI, Mark, Palm Beach Gardens, 33418 (US)
(74) Representative: Dehns

(57) **Abstract**

Disclosed herein is a thermal energy storage, TES, system (100). The TES (100) includes two or more energy storage blocks (105) comprising a phase-change material, the energy storage blocks (105) being arranged ordinally with respect to a corresponding nominal phase change temperature of the energy storage blocks (105), and two or more fluid lines (110, 120) routed through the one or more energy storage blocks (105). A first fluid line (110) and a second fluid line (120) from the two or more fluid lines (110,120) are configured to circulate corresponding fluids in opposite directions with respect to the one or more energy storage blocks (105). The ordinal arrangement provides increased efficiency for heat storage and/or transfer, as a fluid circulated through the first fluid line (110) incrementally/decrementally rejects heat to the energy storage blocks (105).

## Description

### CROSS-REFERENCE TO RELATED APPLICATION

This patent application claims the benefit of U.S. Provisional Patent Application No. 63/846,739, filed on July 18, 2025, and U.S. Provisional Patent Application No. 63/726,039, filed on November 27, 2024, which are incorporated by reference herein in their entirety.

### BACKGROUND

The subject disclosure relates to energy storage systems, and more particularly, to energy storage systems having multiple energy storage blocks.

### SUMMARY

Described herein is a thermal energy storage (TES) system, comprising two or more energy storage blocks comprising a phase-change material, the two or more energy storage blocks being arranged ordinally with respect to a nominal phase-change temperature of the two or more energy storage blocks, and two or more fluid lines routed through each of the energy storage blocks, wherein a first fluid line and a second fluid line of the fluid lines are configured to circulate a first fluid and a second fluid, respectively, in opposite directions through each of the energy storage blocks.

In one or more embodiments, the first fluid line comprises a refrigerant line configured to circulate the first fluid comprising a refrigerant to exchange heat with the energy storage blocks.

In one or more embodiments, the refrigerant comprises one of a R410A refrigerant, a R454D refrigerant, a R455C refrigerant, a R468C refrigerant, a R454C refrigerant, a R-1270 refrigerant, a R290 refrigerant, a R744 refrigerant, a R718 refrigerant, a R717 refrigerant, a R32 refrigerant, a R20 refrigerant, or a R454B refrigerant.

In one or more embodiments, the second fluid comprises a single-phase fluid.

In one or more embodiments, the nominal phase-change temperature of each of the energy storage blocks is between about -10 degrees Celsius to about 100 degrees Celsius.

In one or more embodiments, a first energy storage block of the two or more energy storage blocks has a first nominal phase-change temperature that is greater than a saturation temperature of the first fluid circulated through the first fluid line, and a second energy storage block of the two or more energy storage blocks has a second nominal phase-change temperature that is less than the saturation temperature of the first fluid.

In one or more embodiments, a first energy storage block of the two or more energy storage blocks having higher nominal phase-change temperature than a second energy storage block of the two or more energy storage blocks, is disposed upstream of the second energy storage block with respect to the first fluid line.

In one or more embodiments, the TES system further comprises one or more thermally insulating partitions, each thermally insulating partition being disposed between each of the energy storage blocks, and being configured to prevent heat exchange and/or mixing of phase change materials between each of the energy storage blocks.

In one or more embodiments, the TES system further comprises a heater thermally coupled to at least one of the two or more energy storage blocks.

In one or more embodiments, the heater is a resistive heater.

In one or more embodiments, the TES system further comprises an intermediate exit line connected to the first fluid line, the intermediate exit line being configured to circulate the first fluid through the first fluid line bypassing at least one of the energy storage blocks.

In one or more embodiments, the intermediate exit line comprises a valve configured to operably open or close to circulate the first fluid bypassing at least one of the energy storage blocks.

In one or more embodiments, the intermediate exit line is connected to an outlet of the first fluid line.

In one or more embodiments, at least one dimension of each of the two or more energy storage blocks is equal.

In one or more embodiments, the two or more fluid lines comprise at least one of enhanced tubes and/or microchannel tubes having one or more fins.

In one or more embodiments, the one or more fins have at least one of a flat shape and/or a corrugated shape.

In one or more embodiments, the TES system further comprises a cooling plate inserted between each of the energy storage blocks.

In one or more embodiments, the TES system further comprises a sensible energy storage block.

Described herein is a domestic water heater system, comprising a water source and a thermal energy storage (TES) system, wherein the TES system comprises two or more energy storage blocks comprising a phase-change material, the two or more energy storage blocks being arranged ordinally with respect to a nominal phase change temperature of the energy storage blocks, a refrigerant line routed through each of the energy storage blocks, and configured to circulate a refrigerant that ejects heat to the energy storage blocks, and a water line routed through each of the energy storage blocks, and configured to circulate water that absorbs heat from the energy storage blocks.

In one or more embodiments, the refrigerant line and the water line are configured to circulate the refrigerant and the water in opposite directions through each of the energy storage blocks.

In one or more embodiments, the domestic water heater system further comprises a heat pump configured to transfer heat into the refrigerant.

In one or more embodiments, the refrigerant line and the water line are configured to circulate the refrigerant and water concurrently.

In one or more embodiments, the domestic water heater system further comprises a heater thermally coupled to at least one of the two or more energy storage blocks.

Described herein is a method of storing and retrieving thermal energy, the method comprising, providing a TES system comprising two or more energy storage blocks having a phase-change material, and arranged ordinally with respect to a corresponding nominal phase-change temperature, and a first fluid line and a second fluid line routed through each of the energy storage blocks in a counter-flow arrangement, and circulating a first fluid through the first fluid line for storing energy to the two or more energy storage blocks, or circulating a second fluid through the second fluid line for retrieving energy from the two or more energy storage blocks.

The foregoing summary is illustrative only and is not intended to be in any way limiting. In addition to the illustrative aspects, embodiments, and features described above, further aspects, embodiments, features, and techniques of the invention will become more apparent from the following description taken in conjunction with the drawings.

### BRIEF DESCRIPTION OF THE DRAWINGS

The accompanying drawings are included to provide a further understanding of the invention. The drawings illustrate exemplary embodiments and, together with the description, serve to explain the principles of the invention.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIG. 1 illustrates an example thermal energy storage (TES) system;
FIG. 2 illustrates another embodiment of the TES system;
FIG. 3 illustrates a further embodiment of the TES system having an intermediate exit line connected to an outlet of the TES system; and
FIGs. 4A and 4B illustrate schematic representations of a domestic water heater system.

### DETAILED DESCRIPTION

The following is a detailed description of embodiments depicted in the accompanying drawings. The amount of detail offered is not intended to limit the anticipated variations of the embodiments; on the contrary, the intention is to cover all modifications, equivalents, and alternatives of the described embodiments falling within the scope of the subject invention as defined by the appended claims.

Various terms are used herein. To the extent a term used in a claim is not defined below, it should be given the broadest definition that persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art after a complete reading of the subject disclosure, the components of this disclosure may be positioned in any desired orientation. Thus, the use of terms such as "above," "below," "upper," "lower," "first," "second," or other like terms to describe a spatial relationship between various components or to describe the spatial orientation of aspects of such components should be understood to describe a relative relationship between the components or a spatial orientation of aspects of such components.

The use of the term "about" with reference to a numerical value includes ±15% of the numerical value.

As used herein, "substantially" means largely or considerably, but not necessarily wholly, or sufficiently to work for the intended purpose. The term "substantially" thus allows for minor, insignificant variations from an absolute or perfect state, dimension, measurement, result, or the like as would be expected by a person of ordinary skill in the art, but that do not appreciably affect overall performance.

Thermal energy storage systems are used to store thermal energy for reuse at a later point in time. Such systems can be used to overcome the imbalance between supply and demand of thermal energy. Some existing systems use phase-change materials that store thermal energy as latent heat. Such phase-change materials absorb and/or eject/reject thermal energy when changing phases.

Many existing applications where thermal energy storage is required may use heat pumps as the source of heat, and/or as a sink for heat (such as for cooling thermal energy storage systems). However, heat pumps often cannot provide a heat transfer fluid with an adequately high temperature under certain operating conditions to melt a single block of phase changing material. Consequently, phase-change materials with a lower phase-change temperature are used, which are supplemented by heating elements (which often use electrical energy) to increase the temperature of other heat transfer fluids (such as water) to the required levels. However, the use of heating elements increases electrical consumption, and thereby reduces the coefficient of performance of a system or device implementing the energy storage system (such as a heat pump-thermal energy storage system (HP-TES).

The subject disclosure provides a thermal energy storage (TES) system that includes two or more energy storage layers or blocks. Each of the energy storage blocks includes phase-change materials having different melting temperatures/nominal phase-change temperatures (PCTs). The energy storage blocks are arranged ordinally with respect to the corresponding nominal PCT of the energy storage blocks (or the phase-change materials therein). Further, the TES system includes two or more fluid lines routed through the two or more energy storage blocks, where a first fluid line and a second fluid line from the two or more fluid lines are configured to circulate a corresponding fluid (such as a first fluid and a second fluid, respectively) therethrough in opposite directions. The first fluid line may also be routed through a heat pump configured to supply heat to the first fluid (such as a refrigerant) therethrough, the first fluid being configured to exchange heat with (or transfer heat to) the energy storage blocks. The first fluid may be heated by a heat pump. The second fluid line may include another/second fluid (such as single-phase fluids like water or water-brine mixture) from a water source, the second fluid being circulated to exchange heat with (or absorb heat from) the energy storage blocks. Additionally, a heater may be thermally coupled to the energy storage blocks, to provide additional heat. Since the energy storage blocks are stacked ordinally based on the nominal PCT thereof along the first fluid line (such as in decreasing order with respect to the first fluid line), each of the energy storage blocks may absorb heat/thermal energy from the first fluid and reduce the temperature of the first fluid to a value greater than that of the nominal PCT of the subsequent layer/energy storage block, thereby increasing the amount of thermal energy stored in the TES (by adapting the temperature of the first fluid to store energy in multiple energy storage blocks), and improving the efficiency of the TES system (with respect to energy storage and retrieval) and/or coefficient of performance of the systems implementing the TES system (such as the HP-TES system).

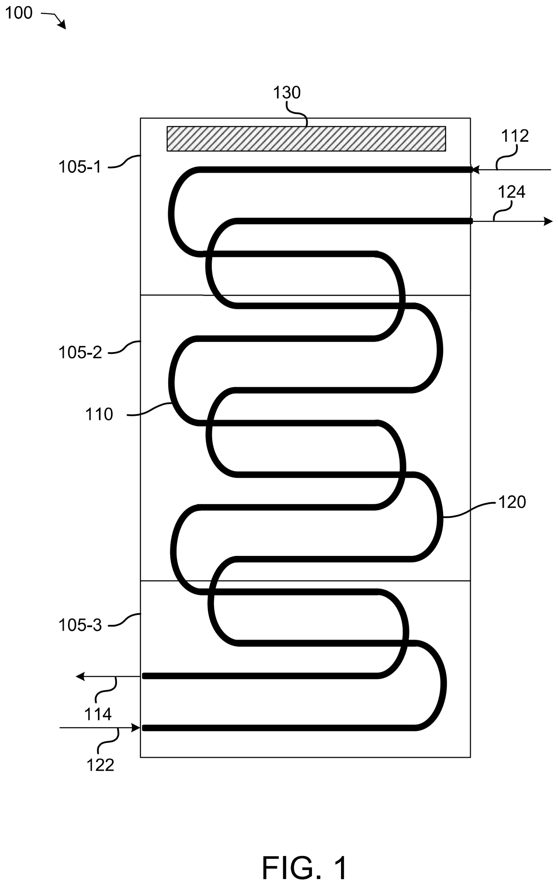

Various embodiments of the subject disclosure are described in detail in reference to FIGs. 1 to 4.

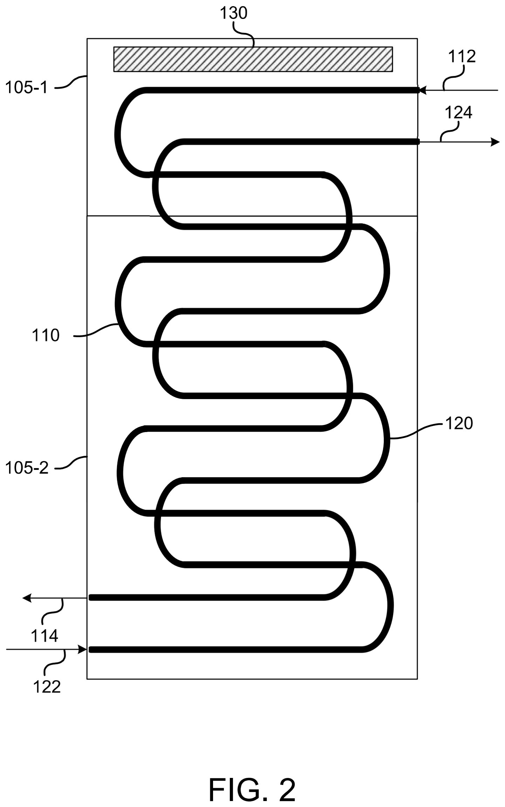

Referring to FIGs. 1 and 2, a TES system or TES 100 may include two or more energy storage layers or blocks, such as first, second, and third/last energy storage block 105-1, 105-2, 105-3 (collectively referred to as energy storage blocks 105). While three energy storage blocks are shown in FIG. 1, it may be appreciated that the TES 100 may be suitably adapted to include any number of energy storage blocks (such as two energy storage blocks shown in FIG. 2). The TES 100 may also include two or more fluid circuits/lines routed through at least one of the energy storage blocks 105. For instance, in FIG. 1, a first fluid line (such as refrigerant line 110) and a second fluid line (such as single-phase fluid line 120) may be routed through each of the energy storage blocks 105. The fluid lines may be configured to circulate a corresponding fluid (such as a first fluid including a refrigerant through the refrigerant line 110, and a second fluid including single-phase fluids such as water or water-brine mixture through the single-phase fluid line 120). In one or more embodiments, the first and the second fluids may include mixtures of multiple fluids, including the refrigerant and water, among other fluids, respectively. The fluid lines may be configured to either absorb from or reject/eject heat to the energy storage blocks 105 through the corresponding fluid being circulated therethrough. In one or more embodiments, the first and the second fluid lines may be configured to circulate the corresponding fluids in opposite directions, i.e., in a counter flow arrangement.

In one or more embodiments, the energy storage blocks 105 may be stacked one over the other. Each of the energy storage blocks 105 may have a different PCT/melting point or a nominal PCT. In one or more embodiments, the energy storage blocks 105 may be stacked ordinally with respect to the nominal PCT thereof. For example, the energy storage blocks 105 may be stacked/arranged in increasing order of nominal PCT from lower/bottom end to upper/top end of the TES 100, or vice-versa, with respect to the orientation shown in FIGs. 1 to 3.

In one or more embodiments, the energy storage blocks 105 may be arranged such that the nominal PCT of the energy storage blocks 105 decreases with respect to flow of the first fluid/refrigerant through the first fluid line/refrigerant line 110. For instance, the nominal PCT of a first energy storage block 105-1 (i.e., top-most with respect to FIG. 1) may be higher than that of subsequent energy storage blocks 105-2 and 105-3. In other embodiments, the direction of flow of the first and second fluids through the first fluid line and the second fluid line may be reversed.

In some embodiments, the nominal PCT may refer to a mid-point of a PCT range of the energy storage blocks 105. For instance, since the energy storage blocks 105 may include impurities, the temperature at which the phase change material in the energy storage blocks 105 changes phases may lie within a range instead of a specific temperature value. In such instances, the nominal PCT may be the mean value or midpoint of minimum and maximum values of the PCT/nominal temperature.

In one or more embodiments, the energy storage blocks 105 may include any one or a combination of, salts, polymers, gels, paraffin waxes, metal alloys, semiconductor-metal alloys, water, salt hydrates, and the like, but not limited thereto. The materials may be selected based on latent heat that can be stored within each of the energy storage blocks 105.

In one or more embodiments, the energy storage blocks 105 may include phase-change materials having nominal PCT between about -10 degrees Celsius to about 100 degrees Celsius. In one or more embodiments, the nominal PCT of each of the energy storage blocks 105 may be between about 40 degrees Celsius to about 100 degrees Celsius. In one or more embodiments, the nominal PCT of each of the energy storage blocks 105 may be between about 50 degrees Celsius to about 70 degrees Celsius.

In some non-limiting examples, the first energy storage block 105-1 may have the highest nominal PCT of about 70 degrees Celsius, the second energy storage block 105-2 may have a nominal PCT of about 60 degrees Celsius, and the third energy storage block 105-3 may have the lowest nominal PCT of about 50 degrees Celsius. However, it may be appreciated that the phase-change materials in the energy storage blocks 105 may be suitably adapted to have a nominal PCT between any other range, based on requirements and/or constraints of the use case. The nominal PCT of the energy storage blocks 105 may be selected based on several parameters, and/or considerations, such as type of refrigerant, operational temperature of the TES 100, and the like, as described below.

In one or more embodiments, the first energy storage block 105-1 may have a first nominal PCT greater than a saturation temperature of the first fluid/refrigerant circulated through the first fluid line/refrigerant line 110. The first energy storage block 105-1 may be configured to absorb superheat temperature/thermal energy from the first fluid/refrigerant. Further, another energy storage blocks (such as the second energy storage block 105-2 and/or last energy storage block 105-3) may have a second nominal PCT less than the saturation temperature of the fluid/refrigerant circulated through the first fluid line/refrigerant line 110.

In one or more embodiments, the TES 100 may include a sensible energy storage block. The sensible energy storage block may be configured to absorb sensible heat, such as from the refrigerant. In one or more embodiments, the first energy storage block 105-1 may include or be replaced by the sensible energy storage block having a heat capacity greater than that of subsequent energy storage blocks (such as the second energy storage block 105-2). In one or more embodiments, the sensible energy storage block may include a block of graphite or metal. In other embodiments, the sensible energy storage block may be configured to replace any other energy storage block 105.

In such embodiments, the top-most energy storage block 105-1 may be configured to absorb superheat of the first fluid/refrigerant. Further, the subsequent layers through which the refrigerant/first fluid may pass through may be configured to absorb/capture latent heat and/or subcooling temperature/thermal energy.

The energy storage blocks 105 may be configured to store thermal energy as latent heat. The thermal energy may be absorbed/stored as latent heat when the energy storage blocks 105 change phases (such as from solid to liquid, or liquid to gas). Similarly, the thermal energy stored as latent heat may be retrieved by causing the energy storage blocks 105 to change phases (such as from liquid to solid, or gas to liquid). In one or more embodiments, the energy storage blocks 105 may also be configured to store and release thermal energy as sensible heat.

In one or more embodiments, the energy storage blocks 105 may be arranged/stacked based on heat/thermal energy transferable (i.e., energy storage capacity) at each of the energy storage blocks 105. The ratio or proportion of heat/thermal energy transferable by the energy storage blocks 105 may be determined based on the nominal PCT, and/or the volume, geometric profile, or other properties of the energy storage blocks 105. In one or more embodiments, the volume ratio of the phase-change material in each of the energy storage blocks 105 may be selected based on any one or a combination of, density, heat of fusion, an energy storage block embedded heat exchanger effectiveness (such as capacity of the energy storage block/amount of heat that can be exchanged between the first and/or second fluids, and the phase-change material in the energy storage block), working temperature limits, and nominal PCT of phase-change materials making up each of the energy storage blocks 105, and an inlet temperature, and a desired output temperature of the fluid/water circulated through the second fluid line (i.e., 120). Other considerations may include vapor compression cycle (VCS) related inputs/constraints, such as target heat source temperatures, compressor map, charging heat transfer rate (capacity) to the TES requirement, minimum VCS efficiency, and the like.

In one or more embodiments, application specific requirements and/or constraints may also be used for determining the volume ratio, and/or other design parameters of the energy storage blocks 105, such as nominal PCT. For instance, domestic hot water application related inputs/constraints include minimum cold water temperature entering the TES system, and minimum hot water temperature leaving the TES system. Additionally, TES system related inputs/constraints include maximum refrigerant temperature acceptable by the TES system, minimum nucleation temperatures of phase-change materials, and phase-change material embedded heat exchanger thermal conductance (*UA*)*.* In one or more embodiments, the volume ratio of the phase-change material in each of the energy storage blocks 105 may be inversely proportional to the nominal PCT thereof. For instance, the first energy storage block 105-1 having the highest nominal PCT may have lower volume than the last energy storage block 105-3 having the lowest nominal PCT of all the energy storage blocks 105.

In one or more embodiments, at least one dimension of each of the energy storage blocks 105 may be substantially the same. For example, any one or a combination of the dimensions of the energy storage blocks, including height, width/thickness, length, and the like, may be the same. In one or more embodiments, each of the energy storage blocks 105 may have a substantially similar geometric profile, such as a cuboidal, or cylindrical geometric profile.

In one or more embodiments, the energy storage blocks 105 may also include filler materials. The filler materials may be used to adjust the density of the phase-change material within the energy storage blocks 105. In one or more embodiments, the volume of filler material may be inversely proportional to the intended enthalpy change of the first fluid/refrigerant through each of the energy storage blocks 105. For instance, the filler materials may be used to lower the density of the phase-change material in the energy storage block 105, while keeping the volume/dimensions of all the energy storage blocks 105 substantially equal. In one or more embodiments, the amount of filler material used may be directly proportional to the nominal PCT of the energy storage blocks 105.

The filler materials may be thermally conductive. In one or more embodiments, the thermal conductivity of the filler material may be greater than that of the phase-change material used in the energy storage blocks 105. The thermal conductivity of the filler material may improve heat transfer from the refrigerant to the phase-change material of the energy storage blocks 105, thereby increasing the efficiency of the TES 100.

In one or more embodiments, the TES 100 may include one or more partitions (not shown). Each of the partitions may be placed between each of the energy storage blocks 105. The partitions may be made of thermally insulating materials. The thermally insulating materials may be selected from epoxy resin, polyurethane, and the like, but not limited thereto.

The partitions may be configured to prevent/block heat transfers/exchanges between the energy storage blocks 105. The partitions may be configured to prevent (latent/sensible) heat stored (or being absorbed or ejected/rejected) within one of the energy storage blocks (such as first energy storage block 105-1 having the highest nominal PCT) from causing another energy storage block (such as second energy storage block 105-2 having lower nominal PCT than the first energy storage block 105-1) to melt or change phases.

The fluid lines may be configured to allow a corresponding fluid to be flowed therethrough. In one or more embodiments, the fluid lines may be implemented as pipes, channels, and/or conduits routed through each of the energy storage blocks 105. Such pipes, channels, and/or conduits may include thermally conductive materials to facilitate exchange of heat between the fluids circulated through the fluid lines and the energy storage blocks 105.

In one or more embodiments, the fluid lines may include enhanced tubes. The enhanced tubes may be configured to increase turbulence of the fluid being flowed therethrough, to increase rate of heat transfer.

In other embodiments, the fluid lines may include microchannel tubes having one or more fins. The fins may have at least one of, a flat shape, and/or a corrugated shape. The microchannel tubes, with the use of fins, may improve thermal conductivity between the phase-change materials in the energy storage blocks 105, and/or fluids circulated through the fluid lines. The fins on the fluid lines (or on the heat exchanger tubes forming the fluid lines) may be either discrete or continuous, connecting one serpentine tube to the next.

In one or more embodiments, a cooling plate (not shown) may be inserted between the energy storage blocks 105. The enhanced tubes, microchannel tubes, the fins, and/or the cooling plates may form part of a heat exchanger configured to facilitate the exchange of heat between the fluids and the phase-change material in the energy storage blocks 105. In one or more embodiments, the fins on the heat exchanger tubes may be either discrete or continuous fins that connect one serpentine tube to another.

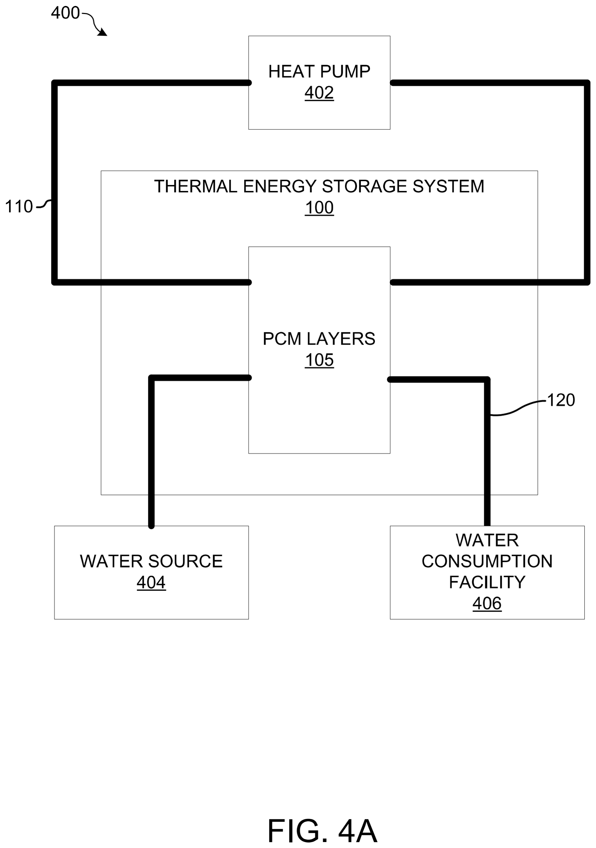

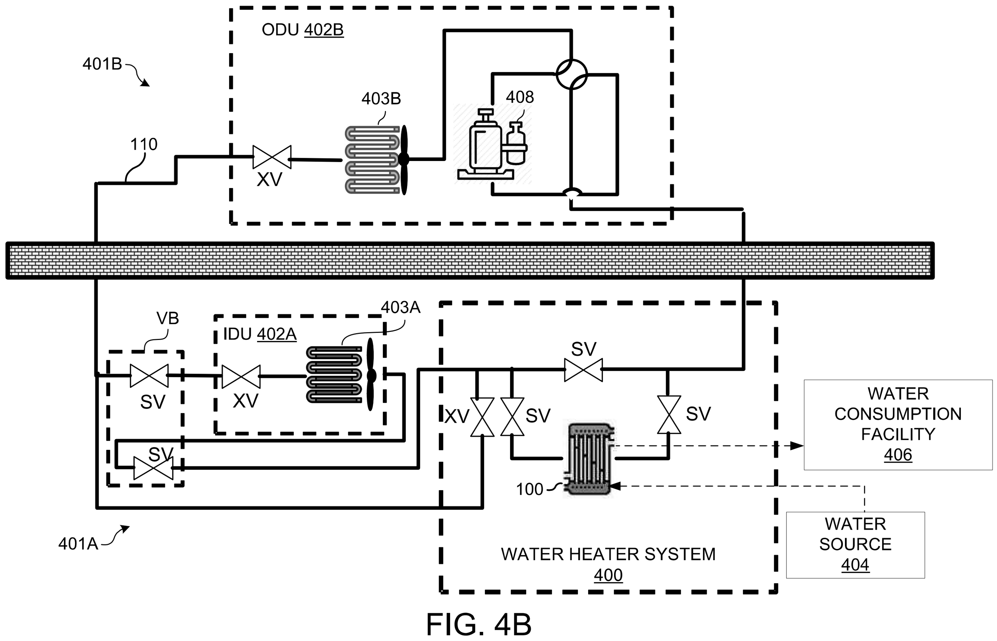

In one or more embodiments, a first fluid line from the fluid lines (such as the refrigerant line 110) may be configured to eject heat to the energy storage blocks 105. The fluid (such as a refrigerant) circulated through the first fluid line (i.e., the refrigerant line 110) may be configured to absorb heat provided by a heat pump (such as heat pump 402 shown in FIG. 4).

In such embodiments, the heat pump 402 may be configured to provide heat/thermal energy, which may be ejected to the refrigerant (or any other fluid). The refrigerant may then be circulated through the energy storage blocks 105, where the heat from the refrigerant may be stored in the energy storage blocks 105. The temperature of the refrigerant may be raised to a value that allows the energy storage blocks 105 to melt, and store the heat as latent heat in the energy storage blocks 105.

In other embodiments, the refrigerant may be configured to absorb heat from heat generating sources, such as a heating, ventilation, and air conditioning (HVAC) system, power plants, industrial processes, data centers, and the like, but not limited thereto. In such embodiments, the refrigerant line 110 may also be routed through such heat generating sources.

In one or more embodiments, the refrigerant may be flowed through the heat generating sources and the refrigerant line 110. The refrigerant may be a single-phase heat dissipation refrigerant or a two-phase heat dissipation refrigerant.

In one or more embodiments, the refrigerant may be any one or a combination of, a R410A refrigerant, a R454B refrigerant, a R-454D refrigerant, a R-455C refrigerant, a R-468C refrigerant, a R-454C refrigerant, a R-1270 refrigerant, a R290 refrigerant, a R744 refrigerant, a R718 refrigerant, a R717 refrigerant, a R32 refrigerant, a R20 refrigerant, or a R454B refrigerant, but not limited thereto.

Further, in one or more embodiments, the energy storage block having a higher nominal PCT may be placed upstream of the flow of fluids on the first fluid line 110, in comparison to the energy storage blocks having a lower nominal PCT. For instance, the first energy storage block 105-1 having a higher nominal PCT than the second energy storage block 105-2 may be placed upstream of the second energy storage block 105-2, and/or the third/last energy storage block 105-3 with respect to the flow of the refrigerant along the refrigerant line 110. Further, the third/last energy storage block 105-3 having the lowest nominal PCT of the energy storage blocks 105 may be placed downstream of the first and/or second energy storage blocks 105-1, 105-2, with respect to the flow of refrigerant along the refrigerant line 110.

Additionally, or alternatively, in one or more embodiments, a second fluid line (such as the single-phase fluid line 120) from the fluid lines may be configured to absorb heat from the energy storage blocks 105, thereby allowing thermal energy within the energy storage blocks 105 to be retrieved, based on requirements/demand. In one or more embodiments, the fluid circulated through the second fluid line 120 may be water. The water may be circulated from a water source (such as water source 404), which may be a water distribution system.

In one or more embodiments, the fluids (such as refrigerant and water) may be circulated through the corresponding fluid lines by a pump or other fluid circulation components (such as compressors). The circulation of the fluids may be controlled based on availability or supply of heat, and/or demand for heating.

In one or more embodiments, the fluid lines may be disposed parallelly to each other. The fluid lines may be placed in proximity to each other, to allow direct heat transfer between the first and the second fluid lines. In other embodiments, the fluid lines may be separated by a distance such that the heat may be transferred between the first fluid line 110 and the second fluid line 120 through the energy storage blocks 105.

In one or more embodiments, the fluid lines may be routed in a serpentine manner through each of the energy storage blocks 105. Routing the fluid lines in a serpentine manner increases the surface area of the fluid lines exposed to the energy storage blocks 105, while allowing the fluid lines to be fit within a compact/smaller volume.

In one or more embodiments, the first and the second fluid lines may be configured to flow the corresponding fluid therethrough in opposite directions with respect to each other. In one or more embodiments, the fluid/refrigerant of the first fluid line/refrigerant line 110 may be flowed from the first energy storage block 105-1 having the highest nominal PCT, to the last energy storage block 105-3 having the lowest nominal PCT of all the energy storage blocks 105.

Accordingly, an inlet 112 of the first fluid line/refrigerant line 110 may be placed at the first energy storage block 105-1, and an outlet 114 of the first fluid line/refrigerant line 110 may be placed at the last energy storage block 105-3.

The fluid/refrigerant flowing through the first fluid line/refrigerant line 110 may release heat to each of the energy storage blocks 105. Since the energy storage blocks 105 may be arranged ordinally with respect to nominal PCT thereof, the temperature of the refrigerant may decrease as the refrigerant successively passes through each of the energy storage blocks 105, thereby improving the efficiency of the TES 100. Furthermore, the ordinal arrangement of the energy storage blocks 105 may increase the temperature of the water incrementally, thereby allowing the water to achieve the target water outlet temperature efficiently, without requiring resistive heating. The ordinal arrangement provides increased efficiency, as a fluid circulated through the first fluid line incrementally/decrementally rejects heat to the energy storage blocks.

In one or more embodiments, as the refrigerant passes through the first energy storage block 105-1, the heat/thermal energy (or superheat energy) in the refrigerant may be absorbed by the first energy storage block 105-1. In some instances, the temperature of the refrigerant may partially (and not entirely) melt the first energy storage block 105-1, leading to situations where the thermal energy capacity of the first energy storage block 105-1 is underutilized. However, after absorption of the thermal energy from the first energy storage block 105-1, the temperature of the refrigerant may reduce to a value close to (within 0.1 Kelvins, for example) or greater than the nominal PCT of the next energy storage block, e.g., the second energy storage block 105-2.

In such embodiments, the temperature of the refrigerant may be sufficient to melt the second energy storage block 105-2, and cause the second energy storage block 105-2 to absorb more heat from the refrigerant, which may further reduce the temperature of the refrigerant to a value close to the nominal PCT of the next energy storage block, e.g., the third/last energy storage block 105-3, and so on.

Having multiple energy storage blocks 105 with different PCT/nominal temperature allows the TES 100 to absorb thermal energy in a cascading manner, as residual heat/thermal energy in the refrigerant (which may be insufficient to melt the initial energy storage blocks 105 either entirely or partially) may be absorbed by subsequent energy storage blocks 105, thereby increasing the efficiency of the TES 100.

In one or more embodiments, the energy storage blocks 105 may include at least one energy storage block, which may melt (and thereby absorb thermal energy) for a given temperature of the refrigerant.

In one or more embodiments, the second fluid line/single-phase fluid line 120 may be configured to flow the second fluid/water from the third/last energy storage block 105-3 having the lowest nominal PCT, to the first energy storage block 105-1 having the highest nominal PCT of all the energy storage blocks 105.

Accordingly, in one or more embodiments, an inlet 122 of the second fluid line/single-phase fluid line 120 may be placed at the last energy storage block 105-3, and an outlet 124 of the second fluid line/single-phase fluid line 120 may be placed at the first energy storage block 105-1.

The fluid/water flowing through the second fluid line/single-phase fluid line 120 may absorb heat while passing through each of the energy storage blocks 105. The water may have a temperature less than the nominal PCT of the energy storage blocks 105, which may cause the energy storage blocks 105 to solidify (either completely or partially), and to release the latent heat stored therein. Since the energy storage blocks 105 may be arranged ordinally with respect to nominal PCT thereof, the temperature of water may increase as water successively passes through each of the energy storage blocks 105.

In one or more embodiments, the TES 100 may include a heater 130. In one or more embodiments, the heater 130 may be thermally coupled to the energy storage blocks 105. In such embodiments, the heater 130 may be configured such that the heater 130 exchanges heat with the energy storage blocks 105. In one or more embodiments, the heater 130 may be placed in any of the energy storage blocks 105. In one or more embodiments, the heater 130 may be placed downstream of the first energy storage block 105-1 with respect to the second fluid line. In one or more embodiments, the heater 130 may be placed in any of the energy storage blocks 105 except the energy storage block 105 having the lowest nominal PCT.

The heater 130 may be placed within the first energy storage block 105-1, i.e., the energy storage block having the highest nominal PCT. The heater 130 may be configured to generate heat, which may be absorbed in the energy storage block 105-1 in addition to the heat absorbed from the refrigerant/fluid flowed through the first fluid line 110. In other embodiments, the heater 130 may be placed outside the energy storage blocks 105. In such embodiments, the heater 130 may be configured to provide additional energy input (temperature boost) to the second fluid line 120 (i.e. the domestic hot water supply). In one or more embodiments, the heater 130 may be a resistive heater, configured to generate heat on being provided with electrical power.

In one or more embodiments, thermal energy may be stored in the TES 100 by flowing the refrigerant (or any other fluid) through the refrigerant line 110 (or the first fluid line), thereby 'charging' the TES 100. The refrigerant may be heated to a temperature greater than or equal to the nominal PCT of the first energy storage block 105-1. In embodiments where the temperature of the refrigerant is less than the nominal PCT of the first energy storage block 105-1, the heater 130 may be used to provide the remaining heat/thermal energy to cause the first energy storage block 105-1 to change phases and absorb/store latent heat therein.

As shown in FIGs. 1 and 2, different numbers of energy storage blocks 105 may be included in the TES 100. In FIG. 2, the TES 100 includes two energy storage blocks 105-1, 105-2. In such embodiments, both the energy storage blocks 105-1, 105-2 may be discharged (or solidified) at the same time. Further, the second energy storage block 105-2 may take the same or greater amount of time to charge (or melt) that the first energy storage block 105-1.

In FIG. 1, the TES 100 includes three energy storage blocks 105-1, 105-2, 105-3. In one or more embodiments, the first energy storage block 105-1 (having the highest nominal PCT of all the energy storage blocks 105) may be undercharged, such as due to the first energy storage block 105-1 having a larger energy/heat storage capacity than other energy storage blocks 105. In such embodiments, the first energy storage block 105-1 may be configured to discharge more quickly than the other energy storage blocks 105-2, 105-3.

In some embodiments, the first energy storage block 105-1 may be configured to protect the second (and/or subsequent) energy storage block 105-2. In some embodiments, the first energy storage block 105-1 may be selected such that the maximum working temperature of the first energy storage block 105-1 is greater than or equal to maximum possible temperature of the refrigerant. Further, the PCT of each of the energy storage blocks may be selected such that the PCT is less than the maximum working temperature of the subsequent energy storage blocks. For instance, the first energy storage block 105-1 may be selected such that the maximum working temperature of the first energy storage block 105-1 is 120 degrees Celsius, when maximum possible temperature of the refrigerant is 90 degrees Celsius. Further, the first energy storage block 105-1 may be selected such that the nominal PCT of the first energy storage block 105-1 is 70 degrees Celsius, when the maximum working temperature of the second energy storage block 105-2 is 80 degrees Celsius. In such instances, the first energy storage block 105-1 may be able to reduce the temperature of the refrigerant to below the maximum working temperature of the second energy storage block 105-2, thereby protecting the second energy storage block 105-2 from the refrigerant which may have otherwise had a temperature greater than the maximum working temperature of the second energy storage block 105-2.

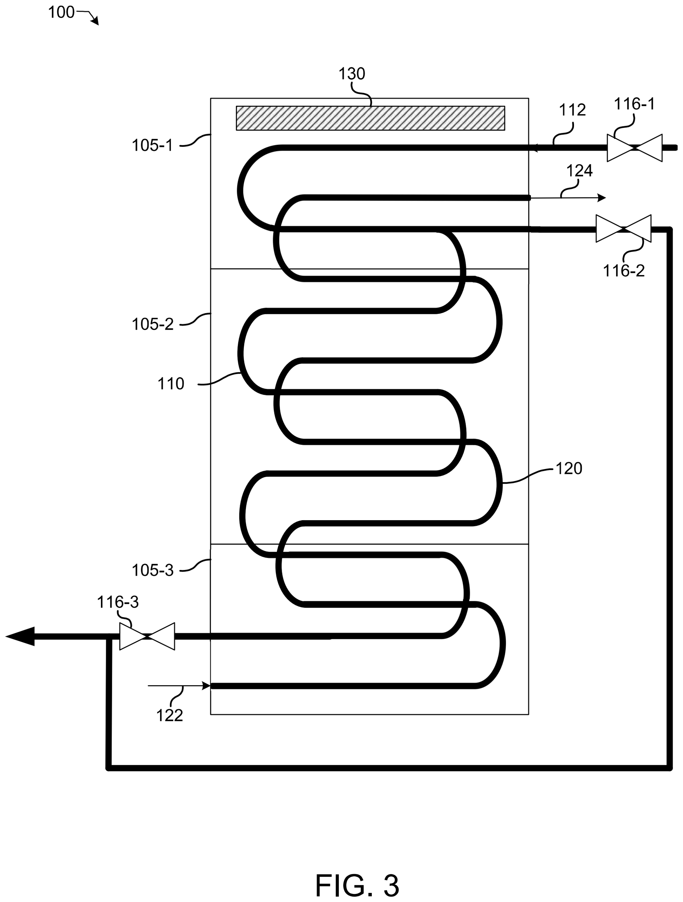

Referring to FIG. 3, the fluid lines may include intermediate exit lines having corresponding valves (such as first, second and third, valves 116-1, 116-2, 116-3, collectively referred to as the valves 116). The valves 116 may be operably opened and/or closed to allow the corresponding fluid (i.e., refrigerant or water) to flow out of the energy storage blocks 105 prematurely, i.e., without having to flow the fluid through all or some of the energy storage blocks 105. For instance, the refrigerant line 110 includes an intermediate exit line configured to allow the refrigerant to exit the first energy storage block 105-1. The flow of the refrigerant through the intermediate exit line may be controlled by the valves 116.

When the first valve 116-1 is open, and the second valve 116-2 is closed, the refrigerant may flow through the first energy storage block 105-1, which may reduce the temperature of the refrigerant to a value approximately equal to or close to (such as within 0.1 Kelvins) the nominal PCT thereof (such as 58 degrees Celsius, for example). The refrigerant may then exit the first energy storage block 105-1, and pass through other energy storage blocks 105-2, 105-3, through the first fluid line 110.

In other embodiments, the second valve 116-2 may be opened, to allow the first fluid to flow into the intermediate exit line. In such embodiments, the first fluid may flow into the intermediate exit line. In one or more embodiments, the second valve 116-2 may be configured to operably open and/or close, to allow the first fluid from the intermediate exit line to flow into the third energy storage block 105-3 or a third valve 116-3, thereby bypassing the second and/or third energy storage block 105-2, 105-3.

In one or more embodiments, the third valve 116-3 may be disposed at the outlet 114 of the refrigerant line 110 (or the first fluid line). The third valve 116-3 may be configured to operably allow or prevent the refrigerant from exiting the energy storage blocks 105. The third valve 116-3 may be operated to stop the flow of the refrigerant through the refrigerant line 110, to provide additional time for heat dissipation, for example. Closing the third valve 116-3 may further enable the pressure of the refrigerant within the refrigerant line 110/first fluid line to be increased.

When the first valve 116-1 is closed and the third valve 116-3 is open, the refrigerant may flow through all the energy storage blocks 105 of the TES 100, and resultantly exchange heat with each of the energy storage blocks 105. When the first valve 116-1 is open, and the second valve 116-2 is also open, the refrigerant may split into a first and second volume, the first volume flowing through each of the energy storage blocks 105, and the second volume flowing through the intermediate exit line. In such embodiments, different volumes of the refrigerant may be available at different temperatures, which may be used for different purposes.

While some locations for the valves 116-1 to 116-3 are shown in FIG. 3, the TES 100 may be suitably adapted to implement the intermediate exit lines between any of the energy storage blocks 105 of the TES 100 by placing the valves 116 at other locations.

While FIG. 3 shows the valves 116 being implemented in the first fluid line, it may be appreciated that, either in addition or in alternative, the valves 116 may also be implemented in the second fluid line. For instance, when the intermediate exit lines are implemented in the single-phase fluid line 120, the water may be allowed to exit after passing through the second energy storage block 105-2 having a PCT/nominal temperature of about 55 degrees Celsius, without passing through the first energy storage block 105-1, such as when there is a demand for water at about 55 degrees Celsius.

Further, the intermediate exit line provided at the first energy storage block 105-1 (or last energy storage block 105-3) may be routed/connected to the outlet (such as outlet 114 with respect to the refrigerant line 110). In such embodiments, a first volume of the fluid exiting the first energy storage block 105-1 may be mixed with a second volume of the fluid exiting from the last/third energy storage block 105-3 (or vice-versa). The mixing of the first and the second volume may average the temperature of the fluid exiting the TES 100.

In one or more embodiments, the intermediate exit line may also be routed through other components, such as for indoor space heating. In such embodiments, a fan or a blower may be configured to blow air over the intermediate exit line or a heat sink/exchanger attached to the intermediate exit line. The air blown may absorb heat from the intermediate exit line or the heat exchanger, thereby heating the indoor space.

Referring to FIGs. 4A and 4B, in one or more embodiments, the TES 100 may be used in a water heater system 400. The water heater system 400 may be used in a residential, a commercial, or an industrial building or a facility that requires hot water on demand, such as for showers, swimming water temperature control, heating mechanical components, and the like, but not limited thereto. In such applications, the water heater system 400 may include a TES (such as TES 100 of FIGs. 1 to 3) configured to energize, and raise the temperature of water retrieved from the water source 404 on demand.

In one or more embodiments, the water source 404 may be a water distribution/supply system. The water source 404 may be a natural or artificial reservoir, from which water may be procured. The water may include sanitary water. The water may be treated before use in residential and/or commercial areas.

In one or more embodiments, thermal energy may be provided by a heat pump 402 to the refrigerant flowing through the refrigerant line 110. In one or more embodiments, the refrigerant may be configured to flow through a heat exchanger associated with the heat pump 402. The heat exchanger may be configured to facilitate the refrigerant to absorb heat from the heat pump 402.

In one or more embodiments, the heat pump 402 may include an indoor unit 402A and an outdoor unit 402B (also referred to as IDU 402A and ODU 402B, respectively), as shown in FIG. 4B. The IDU 402A may be placed on an indoor side 401A and the ODU 402B may be placed on an outdoor side 401B. The IDU 402A and the ODU 402B may be configured to circulate a refrigerant between the IDU 402A and the ODU 402B via a set of pipes/conduits/channels. In one or more embodiments, the heat pump 402 may include a compressor 408 configured to pump the refrigerant through the set of pipes.

In one or more embodiments, the IDU 402A and the ODU 402B may include corresponding heat exchangers (HX), such as indoor HX 403A and outdoor HX 403B, respectively. The HX may be configured to facilitate heat exchange between the refrigerant and air (i.e., indoor air and outdoor air with respect to IDU 402A and ODU 402B, respectively). The indoor HX 403A and the outdoor HX 403B may include corresponding fans configured to blow air over the indoor HX 403A and outdoor HX 403B, to facilitate heat exchange with the air blown and the refrigerant.

In one or more embodiments, the heat pump 402 may be configured to operate in a cooling mode or a heating mode. In the cooling mode, the heat pump 402 may be configured to capture heat within an enclosed or unenclosed space into the refrigerant. In one or more embodiments, the heat pump 402 may be configured to pressurize the refrigerant, to allow the refrigerant to capture/absorb heat when being circulated through the indoor HX 403A in the enclosed or unenclosed space, where the refrigerant may absorb heat from the indoor air.

The refrigerant (which may now have increased pressure and temperature) may be flowed through the energy storage blocks 105. The energy storage blocks 105 may absorb heat from the refrigerant, as the refrigerant flows therethrough. The residual heat in the refrigerant may be circulated through the outdoor HX 403B, which may dissipate the energy from the refrigerant to the outdoor air.

In the heating mode, the ODU 402B may be operated to allow the refrigerant to absorb heat from the outdoor air. In one or more embodiments, once the refrigerant has absorbed heat, the heat pump 402 may be configured to compress/pressurize the refrigerant to raise pressure thereof. The refrigerant may then be circulated to the IDU 402A through the TES 100 of the water heater system 400, where the energy storage blocks 105 may absorb and store the energy/heat from the refrigerant.

In other embodiments, the refrigerant may absorb heat from other heat generating sources. In such embodiments, the refrigerant line 110 may be configured to route or flow the refrigerant through a heat exchanger associated with the heat generating source. The heat exchanger may facilitate conduction of heat from the heat generating source to the refrigerant.

The thermal energy may be stored in the TES 100 by circulating/flowing the refrigerant (or any other heat carrying fluid) through the first fluid/refrigerant line 110. The thermal energy may be stored as latent heat and/or sensible heat in the energy storage blocks 105 of the TES 100.

When the TES 100 is to be discharged, such as when hot water is required (or when the fluid associated with the second fluid line 120 is to be heated), water may be circulated/flowed through the second fluid/single-phase fluid line 120. The water being circulated may absorb heat from the latent heat stored in the energy storage blocks 105. In some embodiments, the water may absorb heat/thermal energy from the last/third/bottom energy storage block 105-3, the subsequent energy storage block (such as second energy storage block 105-2), and finally absorb heat/thermal energy from the first/top energy storage block 105-1, so that the water reaches a temperature at which resistive heating is no longer required, thereby improving the uniform energy factor. Due to the ordinal arrangement of the energy storage blocks 105 with respect to the nominal temperature thereof, the temperature of the water may rise incrementally as the water is flowed from the bottom/last/third energy storage block 105-3 to the top/first energy storage block 105-1. The 'heated' water may then be supplied to the facility requiring hot water.

In one or more embodiments, the first and the second fluids may be circulated concurrently/simultaneously. In such embodiments, both the first and the second fluids (such as the refrigerant and water) may simultaneously exchange heat with the phase-change material in the energy storage blocks 105, thereby allowing for simultaneous charging and/or discharging of the energy storage blocks 105.

The heated water (or fluid) may then be circulated to a water consumption facility 406, which may utilize the heated water. Examples of the water consumption facility 406 may include shower heads and faucets in residential homes, dishwashers, and handwashing stations in commercial establishments such as restaurants, office buildings, or hotels, and various industrial processes requiring heated water for cleaning, sterilization, or as a process input, such as in food processing, textile dyeing, defrosting applications (such as using the TES 100 to store heat, which may be later used to defrost a component in the heat pump/domestic water heater system 400), or chemical manufacturing plants. In one or more embodiments, the water provided by the water heater system 400 may be connected to a conventional mixing valve to add lower temperature water in sufficient volumes to provide the desired water consumption facility temperature. In such embodiments, the PCM output may be equal to or greater than the needed/desired temperature.

Hence, the subject disclosure provides a thermal energy storage system having an improved efficiency of the TES system (such as with respect to energy storage, retention, and/or retrieval), and/or coefficient of performance of systems implementing the TES system (such as a HP TES system). The use of multiple PCM layers ordinally arranged with respect to the PCT/nominal temperature thereof allows energy to be captured from a fluid carrying heat from a heat pump and circulated through a first fluid line (such as refrigerant through a refrigerant line) more efficiently, as there may be at least one energy storage block that melts for any given temperature of the fluid. Further, after one of the energy storage blocks has absorbed at least some of the thermal energy from the fluid, subsequent energy storage blocks may further absorb residual/remaining thermal energy from the fluid, thereby maximizing the amount of thermal energy absorbed. Further, the absorbed thermal energy may be retained within the energy storage blocks, until another fluid is circulated through a second fluid line (such as water through a single-phase fluid line), which may solidify and absorb heat from the energy storage blocks. The heat may be absorbed incrementally from each of the energy storage blocks.

In one or more embodiments, the water heater system 400 and/or the TES system 100 may include a controller (not shown). In one or more embodiments, the controller may be operatively coupled to a component of the water heater system 400 and/or the TES system 100. The controller may be configured to receive and transmit electronic signals to control operation of the water heater system 400 and/or the TES system 100.

In one or more embodiments, the controller may include one or more processors, a memory, and an interface (not shown). The processors may be implemented as one or more microprocessors, microcomputers, microcontrollers, digital signal processors, central processing units, graphical processing units, logic circuitries, and/or any devices that manipulate data based on operational instructions. Among other capabilities, the processor may be configured to fetch and execute computer-readable instructions stored in a memory (not shown).

The memory may store the computer-readable instructions or routines, which may be fetched and executed to create or share the data units to other elements of the controller. The memory may include any non-transitory storage device including, for example, volatile memory such as Random Access Memory (RAM), or non-volatile memory such as an Erasable Programmable Read-Only Memory (EPROM), flash memory, and the like.

In one or more embodiments, the controller may be configured to control components of the water heater system 400 and/or the TES system 100 by transmitting electronic (control) signals thereto. The operation of the controller may reduce operational latency between the components, thereby improving precision of control and performance. Furthermore, the communication of the electronic control signals between the controller, and the components may be achieved through an encryption authorization protocol, such as Transport Layer Security (TLS), Internet Protocol Security (IPsec), Symmetric-Key Encryption, custom cryptographic protocols, Secure Boot/Trusted Platform Modules (TPMs), Hardware Security Modules (HSMs), Building Automation and Control Network (BACnet) or BACnet Secure Connect (BACnet/SC), Modbus TLS, Power line Communication and the like, but not limited thereto. This secure transmission allows for security of the controller by preventing unauthorized access by nature of the secure transmission between the controller, and other components of the water heater system 400 and/or the TES system 100.

In one or more embodiments, a method of storing and retrieving thermal energy may include providing a TES system having two or more energy storage blocks having a phase-change material, and arranged ordinally with respect to a corresponding nominal phase-change temperature, and a first fluid line and a second fluid line routed through each of the energy storage blocks in a counter-flow arrangement. The method may include circulating a first fluid through the first fluid line for storing energy to the two or more energy storage blocks, or circulating a second fluid through the second fluid line for retrieving energy from the two or more energy storage blocks.

While the invention has been described with reference to exemplary embodiments, it will be understood by those skilled in the art that various changes may be made, and equivalents may be substituted for elements of the exemplary embodiments without departing from the scope of the invention as defined by the appended claims. Modifications may be made to adapt a particular situation or material to the teachings of the invention without departing from the scope thereof. Therefore, it is intended that the invention is not limited to the particular embodiment disclosed, but that the invention includes all embodiments falling within the scope defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification or claims refer to at least one of something selected from the group consisting of A, B, C ....and N, the text should be interpreted as requiring only one element from the group, not A plus N, or B plus N, etc.

## Claims

1. A thermal energy storage, TES, system (100), comprising:
two or more energy storage blocks (105) comprising a phase-change material, the two or more energy storage blocks being arranged ordinally with respect to a nominal phase-change temperature of the two or more energy storage blocks; and
two or more fluid lines (110, 120) routed through each of the energy storage blocks, wherein a first fluid line (110) and a second fluid line (120) of the fluid lines are configured to circulate a first fluid and a second fluid, respectively, in opposite directions through each of the energy storage blocks.

2. The TES system of claim 1, wherein the first fluid line comprises a refrigerant line configured to circulate the first fluid comprising a refrigerant to exchange heat with the energy storage blocks, and/or
wherein the second fluid comprises a single-phase fluid.

3. The TES system of claim 1 or 2, wherein a first energy storage block of the two or more energy storage blocks has a first nominal phase-change temperature that is greater than a saturation temperature of the first fluid circulated through the first fluid line, and wherein a second energy storage block of the two or more energy storage blocks has a second nominal phase-change temperature that is less than the saturation temperature of the first fluid.

4. The TES system of claim 1, 2 or 3, wherein a first energy storage block of the two or more energy storage blocks having higher nominal phase-change temperature than a second energy storage block of the two or more energy storage blocks, is disposed upstream of the second energy storage block with respect to the first fluid line.

5. The TES system of any preceding claim, further comprising one or more thermally insulating partitions, each thermally insulating partition being disposed between each of the energy storage blocks, and being configured to prevent heat exchange and/or mixing of phase change materials between each of the energy storage blocks.

6. The TES system of any preceding claim, further comprising a heater (130) thermally coupled to at least one of the two or more energy storage blocks,
wherein the heater is optionally a resistive heater.

7. The TES system of any preceding claim, further comprising an intermediate exit line connected to the first fluid line, the intermediate exit line being configured to circulate the first fluid through the first fluid line bypassing at least one of the energy storage blocks,
wherein the intermediate exit line optionally comprises a valve (116) configured to operably open or close to circulate the first fluid bypassing at least one of the energy storage blocks; and/or
wherein the intermediate exit line is optionally connected to an outlet of the first fluid line.

8. The TES system of any preceding claim, wherein at least one dimension of each of the two or more energy storage blocks is equal.

9. The TES system of any preceding claim, wherein the two or more fluid lines comprise at least one of: enhanced tubes and/or microchannel tubes having one or more fins, wherein the one or more fins optionally have at least one of: a flat shape, and/or a corrugated shape.

10. The TES system of any preceding claim, further comprising a cooling plate inserted between each of the energy storage blocks.

11. The TES system of any preceding claim, further comprising a sensible energy storage block.

12. A domestic water heater system (400), comprising:
a water source (404); and
a thermal energy storage, TES, system (100) comprising:
two or more energy storage blocks (105) comprising a phase-change material, the two or more energy storage blocks being arranged ordinally with respect to a nominal phase change temperature of the energy storage blocks;
a refrigerant line (110) routed through each of the energy storage blocks, and configured to circulate a refrigerant that ejects heat to the energy storage blocks; and
a water line (120) routed through each of the energy storage blocks, and configured to circulate water that absorbs heat from the energy storage blocks.

13. The domestic water heater system of claim 12, wherein the refrigerant line and the water line are configured to circulate the refrigerant and water concurrently.

14. The domestic water heater system of claim 12, further comprising a heater thermally coupled to at least one of the two or more energy storage blocks; and/or further comprising a heat pump configured to transfer heat into the refrigerant.

15. A method of storing and retrieving thermal energy, the method comprising:
providing a thermal energy storage, TES, system (100) comprising two or more energy storage blocks (105) having a phase-change material, and arranged ordinally with respect to a corresponding nominal phase-change temperature, and a first fluid line (110) and a second fluid (120) line routed through each of the energy storage blocks in a counter-flow arrangement; and
circulating a first fluid through the first fluid line for storing energy to the two or more energy storage blocks, or circulating a second fluid through the second fluid line for retrieving energy from the two or more energy storage blocks.
